# EUROPÄISCHE PATENTANMELDUNG

(11) **EP 3 804 525 A1**
(43) Veröffentlichungstag der Anmeldung: **14.04.2021**
(21) Anmeldenummer: 20198577.7
(22) Anmeldetag: 28.09.2020
(51) Int. Cl.: A22C 17/00, B26D 7/01, B26D 7/32, B26D 3/16

(54) **PORTIONIEREINRICHTUNG**

(30) Priorität: 11.10.2019 DE 102019127496
(71) Anmelder: Textor Maschinenbau GmbH, 87787 Wolfertschwenden (DE)
(72) Erfinder: Läufle, Robert, 87435 Kempten (DE); Mayer, Josef, 87766 Memmingerberg (DE); Müller, Fabian, 87488 Betzigau (DE)
(74) Vertreter: Manitz Finsterwald Patent- und Rechtsanwaltspartnerschaft mbB

(57) **Zusammenfassung**

Eine Portioniereinrichtung zum Zusammenstellen von Portionen, die zumindest eine von einem Lebensmittelprodukt, insbesondere Fleischprodukt, insbesondere Frischfleischprodukt, mittels einer Aufschneidevorrichtung abgetrennte Scheibe und/oder zumindest ein mittels der Aufschneidevorrichtung von dem Lebensmittelprodukt abgetrenntes Stück umfassen, weist eine sich entlang einer Förderrichtung erstreckende Ablagefläche zum Ablegen der Portionen und eine bewegbare Platziereinrichtung auf. Dabei umfasst die Platziereinrichtung eine sich von der Ablagefläche erhebende Anlehnfläche für zumindest eine erste abgetrennte und sich auf der Ablagefläche abstützende Scheibe, wobei durch das Bewegen der Platziereinrichtung die Position der Anlehnfläche in Bezug auf die Förderrichtung und/oder die Lage der Anlehnfläche relativ zu der Ablagefläche veränderbar ist.

## Beschreibung

Die Erfindung betrifft eine Portioniereinrichtung zum Zusammenstellen von Portionen, die zumindest eine von einem Lebensmittelprodukt, insbesondere Fleischprodukt, insbesondere Frischfleischprodukt, mittels einer Aufschneidevorrichtung abgetrennte Scheibe und/oder zumindest ein mittels der Aufschneidevorrichtung von dem Lebensmittelprodukt abgetrenntes Stück umfassen, welche eine sich entlang einer Förderrichtung erstreckende Ablagefläche zum Ablegen der Portionen aufweist.

Ferner betrifft die Erfindung eine Aufschneidevorrichtung zum Aufschneiden und/oder Zerteilen von Lebensmittelprodukten, insbesondere Fleischprodukten, insbesondere Frischfleischprodukten, in Scheiben und/oder Stücke.

Im Zuge der Verarbeitung von Lebensmittelprodukten und insbesondere Fleischprodukten bzw. Frischfleischprodukten kann es vorgesehen sein, verhältnismäßig große Produkte in Scheiben zu schneiden oder in Stücke zu zerteilen, um die Produkte portionsweise zum Verkauf anbieten zu können. Dabei können Portionen zumindest eine von dem Produkt abgetrennte Scheibe bzw. ein abgetrenntes Stück umfassen, sodass die Anzahl an Scheiben bzw. Stücken pro Portion variieren kann. Beispielsweise kann es vorgesehen sein, Scheiben von einem Rippenstück abzutrennen, um Portionen von Kotelettscheiben zu bilden, die zumindest eine solche Scheibe umfassen. Ebenso kann es vorgesehen sein, andersartige Fleischprodukte, aber auch lange und insbesondere riegel- oder laibförmige Käseprodukte in Scheiben zu schneiden bzw. in kleinere Stücke zu zerteilen.

Um ein solches Aufschneiden von Produkten in Scheiben und/oder Stücke mit einem möglichst hohen Produktdurchsatz durchführen zu können, erfolgt das Aufschneiden in der Regel maschinell mittels einer Aufschneidevorrichtung. Dabei können die Produkte einer Schneidebene zugeführt werden, in welcher von den Produkten mittels eines Messers Scheiben bzw. Stücke abgetrennt werden. Aufgrund der hohen Schneidgeschwindigkeiten und der erforderlichen Schneidkräfte, um Scheiben bzw. Stücke einer gewissen Dicke abtrennen zu können, gestaltet es sich jedoch häufig schwierig, die abgetrennten Scheiben bzw. Stücke kontrolliert nach dem Schneiden auf einer dafür vorgesehenen Ablagefläche abzulegen bzw. in einer vorgegebenen Anordnung zu einer Portion zusammenzustellen. Insbesondere bei Frischfleischprodukten, die eine äußerst inhomogene Struktur und beispielsweise während des Schneidens zu durchtrennende Knochen aufweisen können, können während des Schneidens kaum zu kontrollierende Impulse auf die abgetrennten Scheiben übertragen werden. Daher kann es sich gerade bei solchen Produkten als äußerst schwierig erweisen, die abgetrennten Scheiben bzw. Stücke in einer vorgebbaren Weise in einem auf die Aufschneidevorrichtung folgenden Portionierbereich abzulegen oder anzuordnen.

Häufig kann es jedoch gewünscht sein, eine Portion in einer für einen Käufer ansprechenden Anordnung zusammenstellen zu können, sodass ein möglichst präzises Ablegen der abgetrennten Scheiben bzw. Stücke auf einer Ablagefläche anzustreben ist. Darüber hinaus kann es auch vorgesehen sein, die vollständig zusammengestellten Portionen weiteren Bearbeitungsschritten zuzuführen, welche eine vorgegebene Anordnung der Portion bedingen. Beispielsweise kann nach dem Aufschneiden der Produkte ein Verpacken der vollständigen Portionen erfolgen, wobei es erforderlich sein kann, dass die Ausdehnung der zusammengestellten Portionen die Ausmaße der vorgesehenen Verpackungen nicht übersteigt.

Es ist daher eine Aufgabe der Erfindung, eine Möglichkeit zum gezielten und kontrollierten Ablegen von Scheiben bzw. Stücken zu schaffen, die mittels einer Aufschneidevorrichtung von einem Lebensmittelprodukt abgetrennt wurden, sowie ein kontrolliertes Zusammenstellen von Portionen aus diesen Scheiben bzw. Stücken zu ermöglichen.

Diese Aufgabe wird gelöst durch eine Portioniereinrichtung mit den Merkmalen des Anspruchs 1 und insbesondere dadurch, dass die Portioniereinrichtung eine bewegbare Platziereinrichtung aufweist, wobei die Platziereinrichtung eine sich von der Ablagefläche erhebende Anlehnfläche für zumindest eine erste abgetrennte und sich auf der Ablagefläche abstützende Scheibe und/oder für zumindest ein erstes abgetrenntes und sich auf der Ablagefläche abstützendes Stück aufweist. Dabei ist durch das Bewegen der Platziereinrichtung die Position der Anlehnfläche in Bezug auf die Förderrichtung und/oder die Lage der Anlehnfläche relativ zu der Ablagefläche veränderbar.

Durch die sich von der Ablagefläche erhebende Anlehnfläche kann sich eine abgetrennte Scheibe an dieser anlehnen, während sich die Scheibe auf der Ablagefläche abstützt, so dass die Scheibe nach dem Abtrennen zunächst in dieser Stellung kontrolliert positioniert werden kann. In der Folge kann durch eine Bewegung der Platziereinrichtung, um die Position der Anlehnfläche in Bezug auf die Förderrichtung bzw. deren Lage relativ zu der Ablagefläche zu verändern, beispielsweise Platz für eine weitere Scheibe einer Portion geschaffen werden. Diese kann sich nach dem Abtrennen an der zuvor abgetrennten Scheibe anlehnen, um ebenfalls kontrolliert in dieser sich anlehnenden und auf der Ablagefläche abstützenden Stellung positioniert zu werden. Nach einem vollständigen Zusammenstellen einer Portion können die Scheiben, die die Portion bilden, beispielsweise durch eine weitere Bewegung der Platziereinrichtung kontrolliert und in vorgegebener bzw. vorgebbarer Anordnung auf der Ablagefläche abgelegt werden, um weiterverarbeitet oder weitertransportiert werden zu können.

Die Anlehnfläche ist dabei von einem jeweiligen Abschnitt der Platziereinrichtung gebildet, an welchem die zumindest eine erste abgetrennte Scheibe effektiv anliegt. Der tatsächliche bauliche Abschnitt der Platziereinrichtung, welcher die Anlehnfläche bildet, kann entsprechend, insbesondere aufgrund eines Bewegens der Platziereinrichtung, während des Betriebs variieren.

Um ein Abstützen auf der Ablagefläche und ein gleichzeitiges Anlehnen an der Anlehnfläche zu ermöglichen, weisen die portionsbildenden Scheiben folglich eine zumindest dazu ausreichende Dicke auf. Dabei steht die abgetrennte Scheibe gewissermaßen sich an der Anlehnfläche anlehnend schräg auf der Ablagefläche. Entsprechend kann eine solche Scheibe auch als ein relativ dünnes Stück des Produktes verstanden werden, sodass die folgenden Ausführungen grundsätzlich auch auf von einem Produkt abgetrennte Stücke zu beziehen sind, wenn die Erfindung in Bezug auf von einem Produkt abgetrennte Scheiben erläutert ist.

Zunächst kann es die Anlehnfläche ermöglichen, die Strecke, während derer sich eine abgetrennte Scheibe frei bewegt, zu beschränken, wozu die Portioniereinrichtung beispielsweise unmittelbar auf eine Schneidebene einer Aufschneidevorrichtung angeordnet werden kann, in welcher von zugeführten Produkten mittels eines Messers Scheiben abgetrennt werden. Dadurch kann die Anlehnfläche in direkter Nähe zu dieser Schneidebene positioniert werden, sodass die abgetrennten Scheiben bereits unmittelbar nach dem Schnitt in Kontakt zu der Anlehnfläche gelangen und sich an dieser anlehnen können. Dadurch können die abgetrennten Scheiben beispielsweise im Vergleich zu einem vollständigen Fallen auf die Ablagefläche bereits früher stabilisiert werden, so dass auch die Möglichkeiten zu unkontrollierten Bewegungen der Scheiben eingeschränkt werden können. Auch die Wirkung von Impulsen in unbestimmten Richtungen, die die Scheibe während des Abtrennens durch das Messer erfahren kann, kann entsprechend aufgrund der verkürzten Strecke, die die Scheibe frei und ungeführt zurücklegt, minimiert werden.

Insbesondere kann es vorgesehen sein, dass die Ablagefläche derart orientiert ist, dass ein durch die Schneidebene vorgeschobenes Produkt bereits während des Schneidens mit einer unteren Seite bzw. Kante auf der Ablagefläche aufliegt. Dadurch kann erreicht werden, dass die abgetrennte und sich ohnehin an der Ablagefläche abstützende Scheibe aufgrund des von dem Messer während des Schneidens empfangenen Impulses in Förderrichtung lediglich gegen die Anlehnfläche kippt und eine möglichst geringfügige Bewegung ausführt. Dadurch können die Auswirkungen unkontrollierter Impulse minimiert und die Scheibe bereits unmittelbar nach dem Abtrennen stabilisiert werden.

Hinsichtlich einer Veränderung der Lage der Anlehnfläche relativ zu der Ablagefläche kann es beispielsweise vorgesehen sein, dass die Platziereinrichtung bzw. die Anlehnfläche verschwenkbar ist. Beispielsweise kann eine abgetrennte und sich an der Anlehnfläche anlehnende Scheibe durch ein solches Verschwenken kontrolliert auf der Ablagefläche abgelegt werden. Indem die Scheibe somit zunächst in kontrollierter Weise sich an der Anlehnfläche anlehnend positioniert werden kann, kann darauffolgend auch ein kontrolliertes und gezieltes Ablegen auf der Ablagefläche erfolgen. Ferner kann die Ablagefläche dabei bewegbar sein oder es kann eine Einrichtung zum Bewegen der abgetrennten Scheiben bzw. Stücke in Förderrichtung vorgesehen sein, so dass die zusammengestellten und wunschgemäß abgelegten Portionen beispielsweise an eine nachgelagerte Fördereinrichtung übergeben werden können.

Indem es alternativ oder zusätzlich vorgesehen sein kann, dass durch das Bewegen der Platziereinrichtung die Position der Anlehnfläche in Bezug auf die Förderrichtung veränderbar ist, kann insbesondere der Abstand der Anlehnfläche zu einer Schneidebene, in welcher das Abtrennen der Scheiben bzw. Stücke von den Lebensmittelprodukten erfolgt, variabel eingestellt werden. Beispielsweise kann dadurch vor dem Abtrennen einer ersten Scheibe bzw. eines ersten Stückes der Abstand zwischen der Anlehnfläche und der Schneidebene in Bezug auf die Förderrichtung eingestellt und an die gewünschte Scheibendicke angepasst werden. Darüber hinaus kann auch der Abstand zwischen dem Stützpunkt der Scheibe und der Anlehnfläche in Bezug auf die Förderrichtung variiert werden, wobei die abgetrennte Scheibe bei einem größeren Abstand weiter verkippt und entsprechend in einem spitzeren Winkel zu der Ablagefläche an der Anlehnfläche anlehnt.

Insbesondere ermöglicht die Veränderbarkeit der Position der Anlehnfläche in Bezug auf die Förderrichtung, diese Position nach dem Abtrennen einer Scheibe zu verändern, um einen erforderlichen Freiraum für das Abtrennen einer nachfolgenden Scheibe zu schaffen. Dadurch können mehrere Scheiben nacheinander abgetrennt werden, wobei die erste abgetrennte Scheibe in direktem Kontakt mit der Anlehnfläche an dieser anlehnt, während die weiteren Scheiben an der jeweiligen zuvor abgetrennten Scheibe anlehnen. Dies kann es ermöglichen, mehrere Scheiben, insbesondere sämtliche Scheiben einer Portion, nacheinander abzutrennen und kontrolliert sich auf der Ablagefläche abstützend aneinander anzulehnen, um eine wunschgemäße Positionierung erreichen zu können. Nach dem Fertigstellen einer Portion können die zugehörigen und aneinander lehnenden Scheiben auf der Ablagefläche abgelegt werden, so dass eine wunschgemäß zusammengestellte Portion auf der Ablagefläche gebildet werden kann. Insbesondere kann die erste Scheibe während eines Bewegens der Platziereinrichtung mit unterschiedlichen Stellen der Platziereinrichtung in direkten Kontakt gelangen bzw. sich an verschiedenen Abschnitten der Platziereinrichtung abstützen, sodass sich der Abschnitt der Platziereinrichtung, welcher die Anlehnfläche bildet, während des Bewegens der Platziereinrichtung verändern kann.

Ferner kann durch die Möglichkeit, die Position der Anlehnfläche variabel einzustellen, eine Anpassung dieser Position an den Schneidvorgang überhaupt erfolgen und es können weitere Parameter bei dieser Einstellung berücksichtigt werden. Beispielsweise kann der Abstand der Anlehnfläche zu einer Schneidebene in Abhängigkeit von der Messerdrehzahl, zu erwartenden Schneidkräften und/oder der Produktbeschaffenheit, insbesondere dem Vorhandensein von Knochen in einem Produkt, variabel eingestellt werden.

Grundsätzlich ist es auch möglich, dass mehrere Produkte gleichzeitig durch eine Schneidebene einer Aufschneidevorrichtung geführt werden und von diesen Produkten gleichzeitig Scheiben abgetrennt werden. Dabei können für jedes der Produkte gesonderte Portioniereinrichtungen vorgesehen sein. Alternativ dazu kann für mehrere Produkte bzw. deren Scheiben eine gemeinsame Portioniereinrichtung vorgesehen sein, an deren Anlehnfläche sich die jeweiligen zuerst abgetrennten und sich auf der Ablagefläche abstützenden Scheiben anlehnen.

Die Bewegung der Platziereinrichtung kann eine lineare Bewegung in Förderrichtung oder eine Drehbewegung sein. Auch Kombinationen solcher Bewegungen sind möglich.

Beispielsweise kann sich die Anlehnfläche geneigt von der Ablagefläche erheben, wobei sich die erste Scheibe insbesondere flächig an der Anlehnfläche anlehnen kann. Eine solche Anlehnfläche kann, insbesondere um vor dem Abtrennen der ersten Scheibe den Abstand zu der Schneidebene an die Scheibendicke anpassen oder mehrere nacheinander abgetrennte Scheiben einer Portion aneinander lehnen zu können, linear entlang der Förderrichtung verfahrbar sein. Dazu kann ein die Anlehnfläche bildendes Element beispielsweise in neben der Ablagefläche angeordneten Schienen geführt und verfahren werden. Um eine vollständig zusammengestellte Portion auf der Ablagefläche ablegen zu können, kann eine derartig ausgebildete Platziereinrichtung bzw. deren Anlehnfläche zusätzlich zu der linearen Bewegung um eine quer zu der Förderrichtung verlaufende Achse verschwenkbar sein, so dass die Portionen durch das Verschwenken auf der Ablagefläche abgelegt und weiterverarbeitet werden können.

Ferner kann es vorgesehen sein, dass die Ablagefläche von einem in Förderrichtung umlaufenden Förderband gebildet wird, welches sich erhebende Stützelemente zum Anlehnen der abgetrennten Scheiben aufweist. Das Ablegen der Scheiben kann dabei beispielsweise an einem Bandübergang zu einem nachfolgenden weiteren Förderband der Portioniereinrichtung erfolgen.

Alternativ zu solchen linearen Bewegungen kann die Platziereinrichtung derart geformt sein, dass der Abstand des die Anlehnfläche für die Scheiben bildenden Abschnitts zu einer Schneidebene bzw. dessen Position in Förderrichtung durch eine Drehbewegung der Platziereinrichtung veränderbar ist. Dabei bezeichnet eine Drehbewegung grundsätzlich eine Drehung der Platziereinrichtung bzw. eines die Anlehnfläche bildenden Elementes bzw. Abschnitts der Platziereinrichtung und nicht beispielsweise lediglich Drehungen von Antriebselementen, die in eine lineare Bewegung der Anlehnfläche entlang der Förderrichtung übertragen werden. Jedoch kann bei einer solchen drehbaren Platziereinrichtung die Drehung sowohl um eine starre Achse als auch um eine in einem gewissen Rahmen, beispielsweise um eine Scheiben- und/oder Portionsbreite, linear verschiebbare Achse erfolgen.

Weitere Ausführungsformen sind den abhängigen Ansprüchen, der Beschreibung und den Zeichnungen zu entnehmen.

Bei einigen Ausführungsformen kann die Anlehnfläche zumindest abschnittsweise gekrümmt und/oder relativ zu der Ablagefläche geneigt verlaufen. Dies ermöglicht es, die abgetrennten und sich auf der Ablagefläche abstützenden Scheiben kontrolliert an der Anlehnfläche anzulehnen.

Die Anlehnfläche kann zumindest abschnittsweise spiralförmig verlaufen, insbesondere zumindest abschnittsweise in Form einer logarithmischen Spirale. Bei einer solchen Ausbildung der Anlehnfläche kann deren Position in Bezug auf die Förderrichtung durch ein Verdrehen der Platziereinrichtung um eine quer zu der Förderrichtung ausgerichtete Achse verändert werden, so dass insbesondere der Abstand der Anlehnfläche zu einer Schneidebene einer Aufschneidevorrichtung durch eine solche Drehung eingestellt werden kann. Dabei ist es nicht notwendig, die Position der Platziereinrichtung bezüglich der Förderrichtung zu verändern.

Insbesondere kann durch eine Ausbildung der Anlehnfläche in Form einer logarithmischen Spirale erreicht werden, dass die Neigung der ersten, sich an der Anlehnfläche anlehnenden Scheibe unabhängig von der Position der Anlehnfläche in Förderrichtung und lediglich durch den Abstand zwischen dem Stützpunkt der Scheibe auf der Ablagefläche und der Anlehnfläche in Bezug auf die Förderrichtung vorgegeben ist. Dies kann insbesondere bei einem Zusammenstellen von Portionen, die mehrere nacheinander abgetrennte Scheiben umfassen, von Nutzen sein, indem für jede der abzutrennenden Scheiben die gleichen Bedingungen hinsichtlich der Positionierung durch die Portioniereinrichtung geschaffen werden können. Dabei kann der Stützpunkt einer abgetrennten Scheibe gemeinsam mit der Anlehnfläche in Förderrichtung bewegt werden, um einen ausreichenden Freiraum für eine nachfolgend abgetrennte Scheibe bereitzustellen. Durch die gemeinsame Bewegung des Stützpunktes mit der Anlehnfläche ändert sich deren Abstand zueinander nicht, sodass auch die Scheibe währenddessen mit der gleichen Neigung an der Anlehnfläche anlehnend verbleiben kann. Die nachfolgend abgetrennte Scheibe, welche nach dem Abtrennen an der zuvor abgetrennten Scheibe anlehnt, lehnt sich folglich mit der gleichen Neigung wie die erste, direkt an der Anlehnfläche anlehnende Scheibe an. Auch der Weg, den die Scheiben während eines Kippens zurücklegen, bevor sie an der Anlehnfläche bzw. einer zuvor abgetrennten Scheibe zur Anlage kommen, kann folglich für sämtliche Scheiben gleich bleiben. Diese für sämtliche Scheiben gleichartigen Bedingungen können ein kontrolliertes und klar vorgebbares Zusammenstellen von Portionen begünstigen.

Bei einigen Ausführungsformen kann die Anlehnfläche durch das Bewegen der Platziereinrichtung unter die Ablagefläche bringbar sein. Dies kann insbesondere ein kontrolliertes Ablegen der Scheiben bzw. einer vollständigen Portion auf der Ablagefläche ermöglichen, um diese beispielsweise weiterverarbeiten oder an einen weiteren Verarbeitungsschritt leiten zu können. Die unter die Ablagefläche gebrachte Anlehnfläche ist folglich nicht mehr wirksam, sodass die zuvor an der Anlehnfläche anlehnenden und sich auf der Ablagefläche abstützenden Scheiben auf der Ablagefläche abgelegt werden können.

Bei einigen Ausführungsformen kann die Platziereinrichtung mehrere quer zur Förderrichtung beabstandete Anlehnelemente aufweisen, welche die Anlehnfläche bilden. Die Anlehnfläche kann dabei in Querrichtung zwischen zwei Anlehnelementen unterbrochen sein, so dass eine streifenartige Struktur der Anlehnfläche vorhanden ist. Auch die Ablagefläche kann entsprechende Unterbrechungen aufweisen, durch welche eine Bewegung der Anlehnelemente, translatorisch oder rotatorisch, ermöglicht werden kann.

Die Anlehnelemente können durch jeweilige in der Ablagefläche vorhandene und sich in Förderrichtung erstreckende Schlitze hindurchgreifen. Derartige Schlitze können insbesondere vorgesehen sein, um eine Bewegung der Platziereinrichtung bzw. der Anlehnelemente zu ermöglichen. Beispielsweise können die Anlehnelemente einer linear in bzw. entgegen der Förderrichtung verfahrbaren Platziereinrichtung durch solche Schlitze mit unterhalb der Ablagefläche positionierten Antrieben bzw. deren Elementen verbunden werden. Dadurch kann insbesondere eine Platz sparende Anordnung eines solchen Antriebes unterhalb der Ablagefläche erreicht werden.

Ferner kann durch ein solches Durchgreifen der Anlehnelemente durch in der Ablagefläche ausgebildete Schlitze eine Drehbewegung oder ein Verschwenken der Anlehnelemente ermöglicht werden. Eine solche Drehbewegung kann beispielsweise vorgesehen sein, um die Position der Anlehnfläche in Bezug auf die Förderrichtung zu verändern. Insbesondere kann durch eine Drehbewegung bzw. ein Verschwenken auch erreicht werden, die Anlehnelemente und entsprechend die Anlehnfläche unter die Ablagefläche zu bringen, um die abgetrennten Scheiben auf der Ablagefläche kontrolliert ablegen zu können.

Eine solche, durch Schlitze unterbrochene Ablagefläche kann beispielsweise durch mehrere quer zu der Förderrichtung zueinander beabstandete Förderriemen gebildet sein, zwischen welchen die Anlehnelemente positioniert sind. Insbesondere können solche Förderriemen dazu dienen, die nach dem Zusammenstellen einer Portion auf der Ablagefläche abgelegten Scheiben in Förderrichtung weiter zu transportieren und beispielsweise an nachgelagerte Einrichtungen zu übergeben. Ferner können die sich auf der Ablagefläche abstützenden Scheiben durch solche Förderriemen während des Zusammenstellens einer Portion mit mehreren Scheiben in Förderrichtung bewegt werden, um einen ausreichenden Freiraum zum Abtrennen der jeweiligen nächsten Scheibe zu schaffen. Alternativ dazu kann die Ablagefläche beispielsweise als eine durch Schlitze unterbrochene Gleitfläche, beispielsweise ein Blech, gebildet sein, wobei die abgelegten Scheiben beispielsweise mittels eines Schiebers weiter gefördert oder von einem Greifer abgenommen und weitergegeben werden können.

Bei einigen Ausführungsformen kann die Platziereinrichtung drehbewegbar sein. Dabei kann die Platziereinrichtung insbesondere während einer solchen Bewegung ihre Position in Förderrichtung beibehalten und ausschließlich eine Rotation ausführen. Die Rotation kann insbesondere um eine Achse quer bzw. senkrecht zu der Förderrichtung erfolgen. Dabei kann durch eine Drehung der Platziereinrichtung die Position der Anlehnfläche in Förderrichtung und/oder die Lage der Anlehnfläche relativ zu der Ablagefläche veränderbar sein. Grundsätzlich ist es auch möglich, dass die Platziereinrichtung um eine in Förderrichtung translatorisch bewegbare Achse drehbewegbar ist, wobei eine solche translatorische Bewegung beispielsweise auf die Dicke einer Scheibe und/oder die Ausdehnung einer Portion in Förderrichtung beschränkt sein kann. Die Drehbewegung kann dabei insbesondere zum Ablegen einer vollständigen Portion auf der Ablagefläche dienen.

Bei einigen Ausführungsformen kann ein bewegbares Fördermittel zum Bewegen der auf der Ablagefläche abgestützten und/oder abgelegten Scheiben und/oder Stücke in Förderrichtung vorgesehen sein. Beispielsweise kann ein solches Fördermittel ein angetriebenes Förderband aufweisen, welches die Ablagefläche bildet. Insbesondere können dabei auch mehrere quer zu der Förderrichtung zueinander beabstandete Förderbänder vorgesehen sein. Alternativ dazu kann die Ablagefläche beispielsweise als Gleitfläche vorgesehen sein, wobei die Portioniereinrichtung ein Vorschubmittel zum Bewegen der auf der Ablagefläche abgestützten und/oder abgelegten Scheiben bzw. Stücke in Förderrichtung umfassen kann.

Vorzugsweise erfolgt das Bewegen der Scheiben und/oder Stücke in Abhängigkeit von der Art und/oder von der Form der jeweils zusammenzustellenden Portionen.

Des Weiteren kann das Bewegen sowohl getaktet als auch kontinuierlich erfolgen.

Ferner kann das Bewegen mit oder ohne Abhängigkeit von dem Betrieb der Aufschneidevorrichtung erfolgen, insbesondere von dem mittels der Aufschneidevorrichtung erfolgenden Abtrennen der Scheiben bzw. Stücke.

Durch das Bewegen der auf der Ablagefläche abgestützten und an der Anlehnfläche anlehnenden Scheiben kann insbesondere ein kontrolliertes Zusammenstellen einer Portion, die mehrere abgetrennte Scheiben umfasst, erreicht werden. Beispielsweise kann, während die Anlehnfläche in Förderrichtung weg von einer Schneidebene bewegt wird, um einen ausreichenden Freiraum zum Abtrennen einer weiteren Scheibe zu schaffen, eine bereits abgetrennte und sich auf der Ablagefläche abstützende Scheibe mittels des Fördermittels derart bewegt werden, dass der Abstand zwischen dem Stützpunkt und der Anlehnfläche konstant bleibt. Dadurch kann die Neigung dieser bereits abgetrennten Scheibe relativ zu der Ablagefläche während der Bewegung konstant gehalten werden, sodass auch die nachfolgend abgetrennte Scheibe mit der gleichen Neigung an der zuvor abgetrennten Scheibe angelehnt werden kann. Dies kann es ermöglichen, den Schneid- und Ablage- bzw. Anlehnvorgang für jede der abzutrennenden Scheiben einer Portion unter gleichen Bedingungen durchzuführen, sodass eine gezielte und kontrollierte Portionsbildung erreicht werden kann. Grundsätzlich ermöglicht es ein solches Fördermittel auch, auf der Ablagefläche einen ausreichenden Platz für eine nachfolgende abzutrennende Scheibe einer Portion zu schaffen.

Ferner kann ein solches Fördermittel ermöglichen, auf der Ablagefläche abgelegte Scheiben, die insbesondere eine vollständig zusammengestellte Portion bilden können, abzutransportieren und beispielsweise an eine nachgelagerte Einrichtung zu übergeben. Beispielsweise kann es vorgesehen sein, die fertigen Portionen mittels einer solchen Einrichtung an eine nachgelagerte Verpackungsmaschine zu übergeben, wobei die Portionen automatisch in dafür vorgesehene Verpackungsplätze eingelegt bzw. auf solche aufgelegt werden können, um in verpacktem Zustand an einen Käufer oder einen sonstigen Abnehmer ausgeliefert werden zu können. Insbesondere kann eine solche Einrichtung dabei als Tiefziehverpackungsmaschine ausgebildet sein, mittels derer in eine Verpackungsfolie eingezogene Mulden bewegt werden, in welche die Portionen unmittelbar von einem Förderband eingelegt werden können.

Bei einigen Ausführungsformen kann eine Steuereinrichtung vorgesehen sein, welche dazu ausgebildet ist, das Bewegen des Fördermittels und das Bewegen der Platziereinrichtung aufeinander abzustimmen, insbesondere miteinander zu synchronisieren. Wie vorstehend bereits erläutert, kann dadurch insbesondere erreicht werden, dass während einer Bewegung der Platziereinrichtung zum Verändern der Position der Anlehnfläche auch der Stützpunkt einer Scheibe auf der Ablagefläche derart bewegt wird, dass der Abstand zwischen dem Stützpunkt und der Anlehnfläche in Bezug auf die Förderrichtung konstant bleibt und die Neigung der sich an der Anlehnfläche anlehnenden Scheibe unverändert bleibt. Dadurch können nachfolgende Scheiben unter gleichen Bedingungen angelehnt werden, um eine kontrollierte Portionsbildung zu ermöglichen. Grundsätzlich kann es auch vorgesehen sein, den Abstand zwischen dem Stützpunkt und der Anlehnfläche während solcher gemeinsamer Bewegungen zu verändern und beispielsweise zunehmend zu vergrößern, so dass ein kontinuierliches Ablegen einer mehrere Scheiben umfassenden Portion auf die Ablagefläche erfolgen kann.

Das Fördermittel und die Platziereinrichtung können einen gemeinsamen Antrieb aufweisen. Insbesondere kann dabei genau ein gemeinsamer Antriebsmotor vorgesehen sein, wobei jeweilige, dem Fördermittel oder der Platziereinrichtung zugeordnete gesonderte Elemente zum Übertragen der von dem Motor generierten Antriebsleistung vorgesehen sein können. Ferner kann ein Kopplungsmittel vorgesehen sein, um eine Bewegung der Platziereinrichtung bzw. der Anlehnfläche mit einer Bewegung des Fördermittels, beispielsweise mechanisch, zu synchronisieren. Ebenso kann der gemeinsame Antrieb eine vorgegebene oder vorgebbare Übersetzungsstufe zwischen der Bewegung des Fördermittels und der Platziereinrichtung aufweisen, um beispielsweise ein kontrolliertes und kontinuierliches Ablegen aufeinanderfolgend abgetrennter Scheiben zu erreichen. Neben der Möglichkeit, eine einfache und zuverlässige Abstimmung der Bewegungen der Platziereinrichtung und des Fördermittels durch einen solchen gemeinsamen Antrieb zu erreichen, können auch die Anzahl an Bauteilen und entsprechend der zum Antrieb der beiden Komponenten erforderliche Platzbedarf minimiert werden.

Alternativ zu einem gemeinsamen Antrieb können das Fördermittel und die Platziereinrichtung jeweils mit einem eigenen Antrieb versehen sein, der zum Beispiel von einem Servomotor gebildet ist. Durch eigene Antriebe ergeben sich flexible Ansteuerungsmöglichkeiten und somit Möglichkeiten für einen flexiblen Betrieb von Fördermittel und Platziereinrichtung.

Insbesondere kann es vorgesehen sein, dass die Bewegungen des Fördermittels und der Platziereinrichtung individuell und anwendungsabhängig, insbesondere produktspezifisch, einstellbar sind. Beispielsweise können jeweilige Übersetzungsstufen zwischen einem Antriebsmotor und der Bewegung der Platziereinrichtung bzw. des Fördermittels vorgesehen sein, welche wähl- und einstellbar sind. Insbesondere kann alternativ oder zusätzlich zu einer Synchronisation der Bewegungen des Fördermittels und der Platziereinrichtung bzw. der Anlehnfläche eine Übersetzungsstufe vorgesehen sein, welche eine schnellere Bewegung bzw. Positionsveränderung der Anlehnfläche im Vergleich zu dem Fördermittel ermöglicht. Dadurch kann der Abstand zwischen dem Stützpunkt der ersten Scheibe und der Anlehnfläche in Bezug auf die Förderrichtung zunehmend vergrößert werden, um ein kontinuierliches Ablegen der Scheibe bzw. der Portion auf der Ablagefläche zu erreichen. Die Platziereinrichtung und das Fördermittel können dazu beispielsweise über jeweilige Getriebe mit einem gemeinsamen Antriebsmotor verbunden sein, wobei diese Getriebe insbesondere schaltbar sein können, um zwischen verschiedenen Übersetzungsstufen und Bewegungsgeschwindigkeiten wählen zu können.

Der Antrieb kann beispielsweise elektromotorische, mechanische und/oder pneumatische Komponenten aufweisen.

Es kann vorgesehen sein, dass die Ablagefläche durch das Fördermittel in Förderrichtung bewegbar ist. Das Fördermittel kann folglich dazu ausgebildet sein, die Ablagefläche unmittelbar und dadurch auch die darauf abgestützten bzw. abgelegten Scheiben zu bewegen. Beispielsweise kann die Ablagefläche dabei von einem oder mehreren in Förderrichtung umlaufenden Förderbändern gebildet werden, mittels derer die abgestützten bzw. abgelegten Scheiben bewegbar sind.

Bei einigen Ausführungsformen kann das Fördermittel zumindest ein in Förderrichtung umlaufendes Förderband umfassen, welches die Ablagefläche bildet, wobei das Fördermittel insbesondere mehrere quer zu der Förderrichtung voneinander beabstandete Förderbänder und/oder Förderriemen umfassen kann, welche die Ablagefläche bilden. Ein solches Förderband kann eine einfache Möglichkeit bieten, die abgestützten bzw. abgelegten Scheiben in Förderrichtung zu transportieren. Insbesondere können zwischen mehreren quer zu der Förderrichtung voneinander beabstandeten Förderbändern und/oder Förderriemen mehrere Anlehnelemente angeordnet sein, welche durch diese zwischen den Förderbändern und/oder Förderriemen gebildeten Schlitze hindurchgreifen.

Es kann vorgesehen sein, dass die Ablagefläche mit einer Antirutschstruktur versehen ist. Beispielsweise kann die Ablagefläche genoppt, mit Spitzen versehen oder verzahnt sein. Dadurch können sich an der Anlehnfläche anlehnende Produkte, welche sich auf der Ablagefläche abstützen, nicht verrutschen, so dass eine sichere und kontrollierte Positionierung erfolgen kann. Insbesondere bei einer bewegbaren Ablagefläche, um beispielsweise während eines Bewegens der Platziereinrichtung und des damit einhergehenden Veränderns der Position der Anlehnfläche den Abstand zwischen dem Stützpunkt der Scheiben auf der Ablagefläche und der Anlehnfläche konstant zu halten und ein Zusammenstellen mehrerer Scheiben zu einer Portion zu ermöglichen, kann durch eine solche Antirutschstruktur ein kontrolliertes Aneinanderlehnen der Scheiben und ein Zusammenstellen solcher Portionen erfolgen.

Bei einigen Ausführungsformen kann die Ablagefläche im Wesentlichen horizontal ausgerichtet sein. Insbesondere kann dies ermöglichen, dass ein durch eine Schneidebene einer Aufschneidevorrichtung vorgeschobenes Produkt mit dem abzutrennenden Teil bereits während des Schneidens auf der Ablagefläche aufliegt, so dass die abgetrennte Scheibe durch den von dem Messer empfangenen Impuls lediglich in Förderrichtung auf die Anlehnfläche kippt und bereits während des Schnittes durch die Ablagefläche gestützt ist. Ferner können vollständig zusammengestellte Portionen dadurch zuverlässig auf der Ablagefläche abgelegt und gegebenenfalls weitertransportiert werden, ohne dass die abgelegten Scheiben verrutschen.

Die Erfindung betrifft ferner eine Aufschneidevorrichtung zum Aufschneiden und/oder Zerteilen von Lebensmittelprodukten, insbesondere Fleischprodukten, insbesondere Frischfleischprodukten, in Scheiben und/oder Stücke, mit einer Produktzufuhr, die dazu ausgebildet ist, zumindest ein Produkt entlang einer Zuführrichtung durch eine Schneidebene zu führen, in welcher mittels zumindest eines, insbesondere rotierenden und/oder umlaufenden, Messers Scheiben und/oder Stücke von dem zumindest einen Produkt abgetrennt werden, und mit zumindest einer Portioniereinrichtung wie hierin offenbart.

Die Produktzufuhr einer solchen Aufschneidevorrichtung kann insbesondere einspurig oder mehrspurig ausgebildet sein, um ein Produkt oder mehrere Produkte gleichzeitig in die Schneidebene zu führen. Bei einer mehrspurig ausgebildeten Produktzufuhr kann eine gemeinsame Portioniereinrichtung für mehrere Spuren vorgesehen sein, so dass beispielsweise die gleichzeitig von zwei Produkten abgetrennten jeweiligen ersten Scheiben unmittelbar an der Anlehnfläche der Platziereinrichtung anlehnen können. Alternativ dazu kann eine jeweilige Portioniereinrichtung für jede der Spuren vorgesehen sein, wobei diese Portioniereinrichtungen insbesondere individuell betreibbar bzw. steuerbar sein können. Beispielsweise können dadurch verschiedenartige Produkte gleichzeitig mittels einer Aufschneidevorrichtung in Scheiben und/oder Stücke geschnitten werden, wobei die den jeweiligen Spuren zugeordneten Portioniereinrichtungen an die verschiedenen Produkte und beispielsweise verschiedene Scheibendicken oder verschiedene Anzahlen von Scheiben pro Portion angepasst werden können.

Die Zuführrichtung kann mit der Förderrichtung übereinstimmen. Insbesondere können die Produkte sowohl horizontal durch die Schneidebene geführt werden als auch deren Scheiben auf einer horizontal ausgerichteten Ablagefläche abgelegt werden. Alternativ dazu kann eine relativ zu der, insbesondere horizontal ausgerichteten, Förderrichtung geneigte Zuführrichtung vorgesehen sein. Beispielsweise können die Produkte in einem Winkel zwischen 0° und 60° relativ zu der Horizontalen durch die Schneidebene geführt werden, wobei insbesondere ein rechter Winkel zwischen der Anlehnfläche und der Zuführrichtung vorgesehen sein kann. Durch einen solchen rechten Winkel können von geneigt zugeführten Produkten abgetrennte Scheiben zuverlässig an der Anlehnfläche angelehnt werden und die von den Scheiben zwischen dem Abtrennen und dem stabilisierenden Anlehnen zurückzulegende Strecke kann minimiert werden.

Die Portioniereinrichtung kann in Zuführrichtung unmittelbar nachfolgend auf die Schneidebene angeordnet sein. Insbesondere kann ein durch die Schneidebene geführtes Produkt während des Abschneidens einer Scheibe bereits auf der Ablagefläche aufliegen, so dass die abgetrennte Scheibe durch den Impuls des Messers in Förderrichtung lediglich gegen die Anlehnfläche kippt und sich bereits während des Abschneidens an der Ablagefläche abstützen kann. Ferner kann eine Bewegung der Platziereinrichtung, um die Anlehnfläche in Förderrichtung weg von der Schneidebene zu bewegen, bereits während des Abschneidens einer Scheibe beginnen, sodass die Anlehnfläche im Moment des Abtrennens der Scheibe korrekt positioniert ist und die während des Durchführens eines Schnittes zur Verfügung stehende Zeit zu diesem Positionieren genutzt werden kann.

Die Förderrichtung, entlang derer sich die Ablagefläche der Platziereinrichtung erstreckt, kann im Wesentlichen horizontal verlaufen. Insbesondere kann dies ein kontrolliertes Ablegen einer vollständig zusammengestellten Portion auf der Ablagefläche sowie gegebenenfalls deren Weitertransport ermöglichen.

Wenn die Zuführrichtung mit der Förderrichtung übereinstimmt, können die Produktzufuhr und die Ablagefläche in einer gleichen Richtung ausgerichtet sein. Dadurch kann das Produkt beispielsweise während des Abschneidens bereits auf der Ablagefläche aufliegen, sodass ein Vorschub des Produktes durch die Schneidebene nicht durch eine geneigt zu der Zuführrichtung ausgerichtete Ablagefläche beschränkt wird.

Bei einigen Ausführungsformen kann eine Steuereinrichtung vorgesehen sein, welche dazu ausgebildet ist, das Bewegen der Platziereinrichtung auf den Betrieb der Aufschneidevorrichtung abzustimmen. Insbesondere kann dadurch die Positionierung der Anlehnfläche in Abhängigkeit von den jeweiligen abzutrennenden Scheiben und beispielsweise deren Dicke erfolgen. Dazu kann insbesondere eine Abstimmung mit der Produktzufuhr und/oder dem Messer erfolgen, um beispielsweise den Vorschub der Produkte durch die Schneidebene und entsprechend die Länge des Anteils des Produktes, welcher über die Schneidebene hinausragt, auf die Bewegung der Platziereinrichtung bzw. die Positionierung der Anlehnfläche abstimmen zu können. Ebenso können beispielsweise verschiedene Rotationsgeschwindigkeiten von Messern und damit einhergehende Schneidkräfte berücksichtigt werden, um die Anlehnfläche beispielsweise in Abhängigkeit von den zu erwartenden Impulsen, welche auf die abgetrennten Scheiben von dem Messer übertragen werden, einstellen zu können.

Alternativ oder zusätzlich kann die Platziereinrichtung, insbesondere die Anlehnfläche, chargenabhängig und/oder produktabhängig positioniert und/oder bewegt werden, beispielsweise in Abhängigkeit von der Temperatur und/oder den Eigenschaften eines Frostrandes des jeweiligen Produktes.

Ferner kann die Platziereinrichtung ein in Förderrichtung bewegbares Fördermittel aufweisen, wobei die Steuereinrichtung dazu ausgebildet sein kann, auch die Bewegung des Fördermittels mit der Aufschneidevorrichtung und dem Bewegen der Platziereinrichtung abzustimmen. Insbesondere kann die Steuereinrichtung dazu ausgebildet sein, die Bewegung der Platziereinrichtung mit der Bewegung eines solchen Fördermittels zu synchronisieren.

Bei einigen Ausführungsformen kann der Portioniereinrichtung eine Fördereinrichtung zum Weiterfördern der Portionen nachgelagert sein, wobei die Portioniereinrichtung dazu ausgebildet sein kann, die Portionen an die Fördereinrichtung zu übergeben. Insbesondere kann die Ablagefläche der Portioniereinrichtung von einem und/oder mehreren Förderbändern gebildet werden, mittels derer die vollständig gebildeten Portionen in Förderrichtung transportiert und an eine nachgelagerte Fördereinrichtung übergeben werden können.

Insbesondere kann es vorgesehen sein, dass die vollständig zusammengestellten und an die Fördereinrichtung übergebenen Portionen in der Folge von dieser zu einer Verpackungsmaschine geführt werden, um die Portionen dort automatisch zu verpacken und fertig verpackt zum Verkauf anbieten zu können. Insbesondere kann eine solche Verpackungsmaschine dabei als Tiefziehverpackungsmaschine ausgebildet sein, wobei die Portionen beispielsweise automatisch von einem Förderband der Fördereinrichtung in dazu vorgesehenen Mulden eingelegt werden können. Ebenfalls kann es vorgesehen sein, dass an einem Ende der Fördereinrichtung ein Roboter positioniert ist, welcher die Portionen in dafür vorgesehene Verpackungsplätze einlegt bzw. auf solche auflegt.

Die Erfindung wird im Folgenden rein beispielhaft anhand eines Ausführungsbeispiels unter Bezugnahme auf die Zeichnungen erläutert.

Es zeigen:
- Fig. 1: eine perspektivische Ansicht einer Portioniereinrichtung für eine Aufschneidevorrichtung zum Aufschneiden und/oder Zerteilen von Lebensmittelprodukten,
- Fig. 2A bis 2E: jeweilige Seitenansichten der Portioniereinrichtung während des Zusammenstellens und Ablegens einer Portion aus vier nacheinander abgetrennten Scheiben,
- Fig. 3A und 3B: jeweilige Seitenansichten der Portioniereinrichtung zur Veranschaulichung der variablen Einstellung der Neigung einer ersten sich an einer Anlehnfläche anlehnenden Scheibe und
- Fig. 4: eine perspektivische Seitenansicht auf ein Anlehnelement.

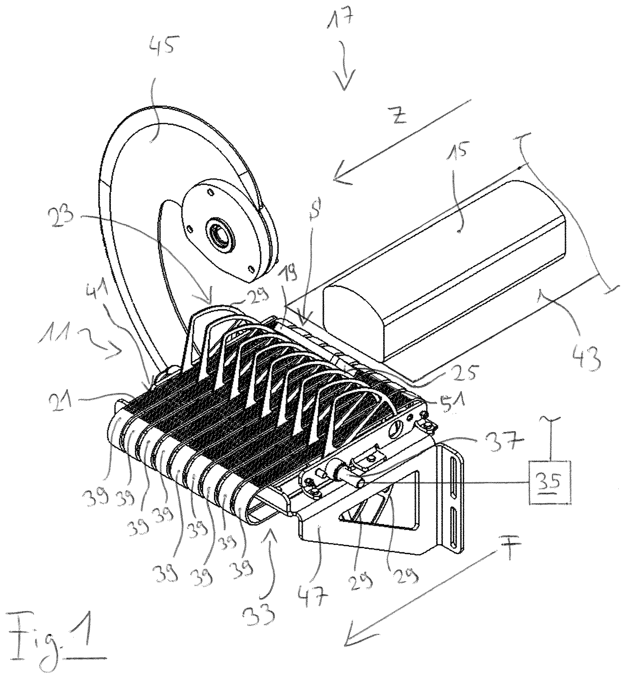

Fig. 1 zeigt eine Portioniereinrichtung 11, die unmittelbar nachfolgend auf eine Schneidebene S einer Aufschneidevorrichtung 17 angeordnet ist. Diese Aufschneidevorrichtung 17 weist eine Produktzufuhr 43 auf, mittels derer ein Lebensmittelprodukt 15 entlang einer Zuführrichtung Z durch die Schneidebene S geführt wird, in welcher ein sichelförmig ausgebildetes Messer 45 umläuft und von dem Produkt 15 Scheiben 19 abtrennt. Die Scheibendicke kann dabei insbesondere durch die Abstimmung zwischen der Umlaufgeschwindigkeit des Messers 45 und der Geschwindigkeit, mit welcher die Produktzufuhr 43 das Produkt 15 durch die Schneidebene S fördert, variabel gewählt werden. Insofern ist es auch möglich, mittels einer solchen Aufschneidevorrichtung 17 verhältnismäßig dicke Scheiben 19 abzutrennen und das Produkt 15 beispielsweise in mehrere kleinere Stücke zu zerteilen.

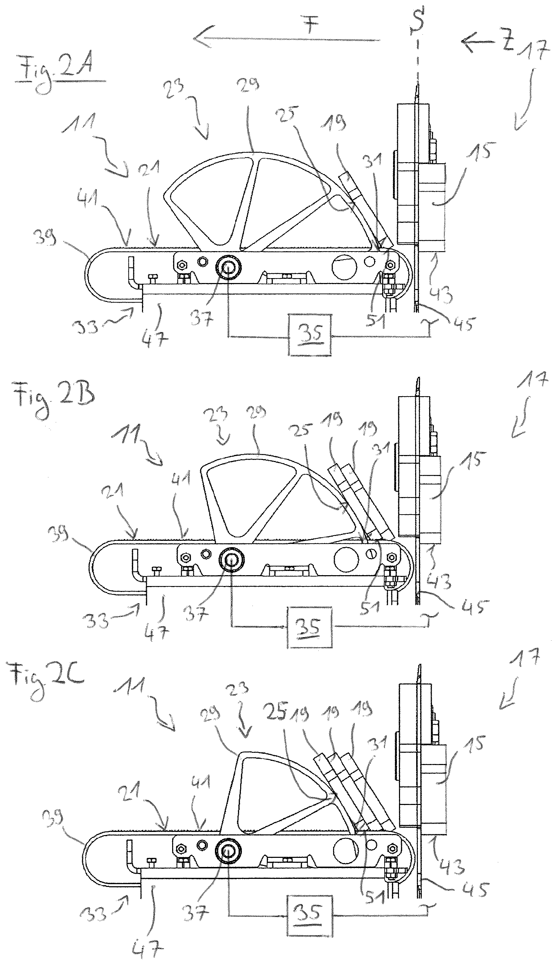

Die Portioniereinrichtung 11 weist eine sich entlang einer Förderrichtung F erstreckende Ablagefläche 21 zum Ablegen der Scheiben 19 bzw. einer daraus gebildeten Portion 13 auf, welche von mehreren quer in Bezug auf die Förderrichtung F zueinander beabstandeten Förderbändern 39 gebildet ist (vgl. auch Fig. 2A bis 2E). Diese in Förderrichtung F umlaufenden Förderbänder 39 sind Teil eines Fördermittels 33, welches ferner einen Antrieb 37 zum Antreiben der Förderbänder 39 umfasst. Insbesondere können die Förderbänder 39 dabei dazu vorgesehen sein, vollständig gebildete Portionen 13 bzw. auf der Ablagefläche 21 abgelegte Scheiben 19 in Förderrichtung F weiter zu transportieren, um diese beispielsweise an eine nachgelagerte Einrichtung zur weiteren Verarbeitung übergeben zu können.

Ferner weist die Portioniereinrichtung 11 eine Platziereinrichtung 23 auf, mittels derer die abgetrennten Scheiben 19 gezielt positioniert und eine vollständig zusammengestellte Portion 13 kontrolliert auf der Ablagefläche 21 abgelegt werden kann (vgl. auch Fig. 2A bis 2E). Diese Platziereinrichtung 23 umfasst mehrere quer zu der Förderrichtung F voneinander beabstandete Anlehnelemente 29, welche zwischen den Förderbändern 39 angeordnet sind und durch aufgrund des Abstandes der Förderbänder 39 zueinander in der Ablagefläche 21 gebildete Schlitze 31 hindurchgreifen.

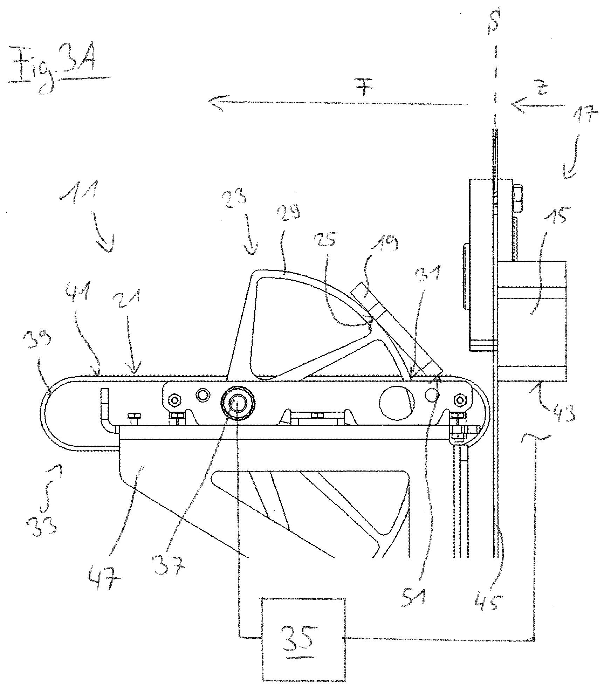

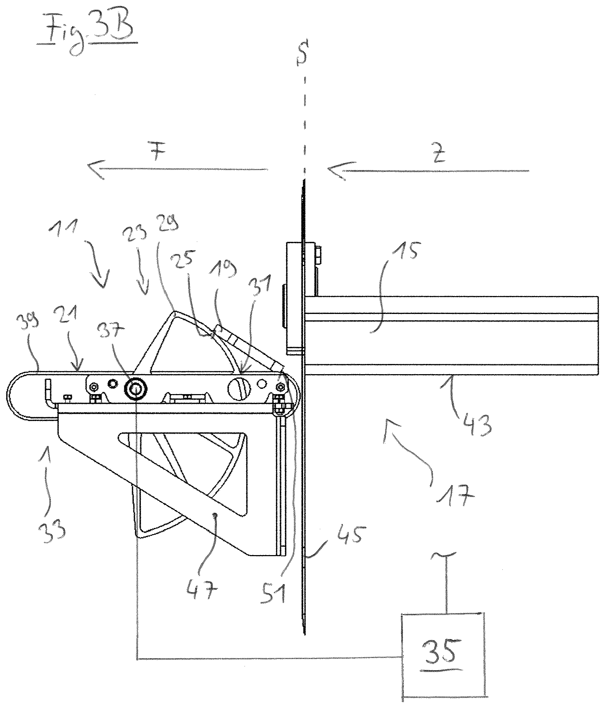

Die Anlehnelemente 29 bilden eine Anlehnfläche 25, an welcher sich die erste abgetrennte Scheibe 19 anlehnt, während sich die Scheibe 19 mit einer unteren Seite bzw. Kante an einem Stützpunkt 51 auf der Ablagefläche 21 abstützt (vgl. auch Fig. 2A bis 2E und Fig. 3A und 3B). Die Anlehnfläche 25 ist dabei aufgrund des Abstandes der Anlehnelemente 29 zueinander streifenartig ausgebildet und wird von den jeweiligen Abschnitten der Anlehnelemente 29 gebildet, an welchen die Scheibe 19 anliegt. Wie die Figuren 2A bis 2E zeigen, kann die Position der Anlehnfläche 25 in Bezug auf die Förderrichtung F bzw. deren Abstand zu der Schneidebene S durch eine Drehbewegung der Platziereinrichtung 23 verändert werden. Aufgrund einer solchen Drehung ändert sich auch der Abschnitt der Anlehnelemente 29, an welchem die erste Scheibe 19 tatsächlich anlehnt, sodass die Anlehnfläche 25 situationsbedingt von verschiedenen Abschnitten der Anlehnelemente 29 gebildet sein kann.

Durch die Anlehnelemente 29 bzw. die Anlehnfläche 25 kann erreicht werden, dass die von dem Produkt 15 mittels des Messers 45 abgetrennte Scheibe 19 bedingt durch einen von dem Messer 45 empfangenen Impuls lediglich gegen die Anlehnfläche 25 kippt und dort unmittelbar nach dem Abtrennen stabilisiert wird. Unkontrollierte Bewegungen der Scheibe 19, die beispielsweise während eines vollständigen Fallens der Scheibe 19 auf die Ablagefläche 21 auftreten können, können somit verhindert werden. Ferner können durch die verhältnismäßig geringe Strecke, welche die abgetrennte Scheibe 19 frei bzw. ungeführt zurücklegt, ungenaue Positionierungen durch während des Schneidens auf die Scheibe 19 in von der Förderrichtung F abweichenden Richtungen übertragene Impulsen vermieden werden. Beispielsweise kann das Durchtrennen eines Knochens des Produktes 15, beispielsweise einem Rippenstück, welches in Kotelettscheiben zerteilt wird, zu derartigen unkontrollierten Impulsen führen, die einem direkten und gezielten Ablegen der Scheiben 19 auf der Ablagefläche 21 entgegenstehen. Die Portioniereinrichtung 11 mit der Platziereinrichtung 23 und der Anlehnfläche 25 ermöglicht hingegen ein kontrolliertes Zusammenstellen von Portionen 13, die von derartigen Produkten 15 bzw. bei hohen Schneidkräften abgetrennte Scheiben 19 umfassen.

Ferner sind in dem gezeigten Ausführungsbeispiel sowohl die Zuführrichtung Z als auch die Förderrichtung F horizontal ausgerichtet, so dass der durch die Schneidebene S geführte Teil des Produktes 15, welcher die abzutrennende Scheibe 19 bildet, bereits während des Schnittes auf der Ablagefläche 21 aufliegen kann. Dadurch kann sich der die abzutrennende Scheibe 19 bildende Teil des Produktes 15 bereits während des Abtrennens auf der Ablagefläche 21 abstützen, sodass die abgetrennte Scheibe 19 lediglich gegen die Anlehnfläche 25 kippt und keine unkontrollierten bzw. vollständig freien Bewegungen ausführt.

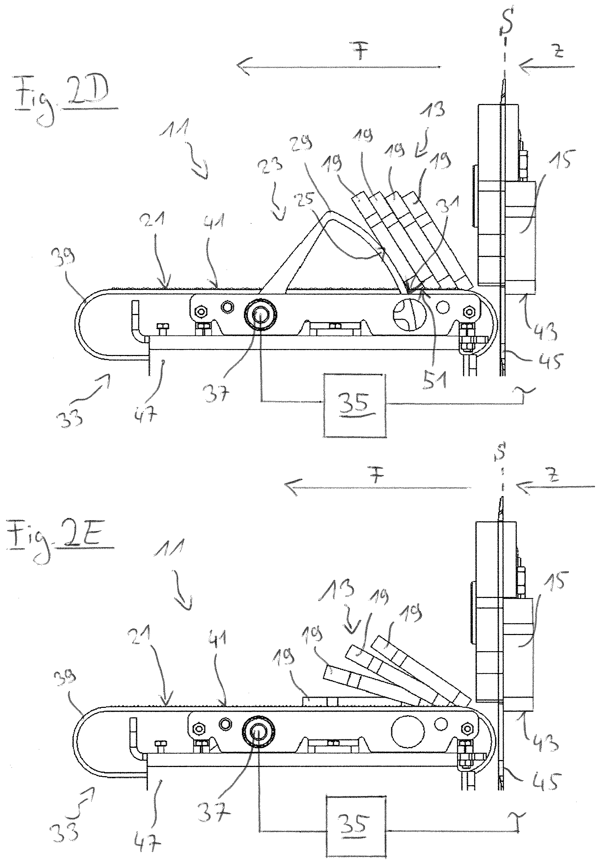

Um die Scheibe 19 bzw. eine Portion 13 bildende Scheiben 19 auf der Ablagefläche 21 ablegen zu können, können die durch die Schlitze 31 hindurchgreifenden Anlehnelemente 29 und entsprechend auch die Anlehnfläche 25 durch eine Drehbewegung der Platziereinrichtung 23 unter die Ablagefläche 21 gebracht werden (vgl. Fig. 2E). Dadurch kann ein kontrolliertes Ablegen der Scheiben 19 auf der Ablagefläche 21 erfolgen, sodass die Scheiben 19 einer Portion 13 in wunschgemäßer Anordnung und gezielt positioniert werden können, um beispielsweise die Maße einer für die Portion 13 vorgesehenen Verpackung zuverlässig einhalten zu können.

Die Drehbewegung der Platziereinrichtung 23 erfolgt dabei, wie auch die Bewegung der Förderbänder 39, mittels des Antriebs 37, so dass lediglich ein gemeinsamer Antrieb 37 für diese beiden Komponenten notwendig ist und verbaut werden muss. Der Antrieb 37 ist mit einer Steuereinrichtung 35 verbunden, um die Drehbewegung der Platziereinrichtung 23 mit dem Antrieb der Förderbänder 39 abzustimmen und diese Bewegungen insbesondere zu synchronisieren. Ferner kann die Steuereinrichtung 35 auch zu einer Abstimmung der Bewegung der genannten Komponenten mit der Aufschneidevorrichtung 17 vorgesehen sein. Beispielsweise kann die Steuereinrichtung 35 dazu ausgebildet sein, das Führen der Produkte 15 durch die Schneidebene S mittels der Produktzufuhr 43 zu steuern und die Positionierung der Anlehnfläche 25 auf die gewünschte Scheibendicke abzustimmen. Ebenfalls kann die Steuereinrichtung 35 zu einer Steuerung bzw. Kontrolle der Bewegung des Messers 45 ausgebildet sein, so dass insbesondere auch Rotationsgeschwindigkeiten bzw. die erzeugten Schneidkräfte bei der Positionierung der Anlehnfläche 25 berücksichtigt werden können.

Ferner weist die Portioniereinrichtung 11 eine Basis 47 auf, welche die weiteren Komponenten trägt. Dadurch kann die Portioniereinrichtung 11 als kompaktes Modul ausgebildet und flexibel mit einer Aufschneidevorrichtung 17 verbunden werden, um ein kontrolliertes Ablegen von Scheiben 19 und Zusammenstellen von Portionen 13 zu ermöglichen. Insbesondere kann die Portioniereinrichtung 11 dadurch auch in einfacher Weise an eine bestehende Aufschneidevorrichtung 17 angeschlossen werden.

Die Fig. 2A bis 2E veranschaulichen das durch die Portioniereinrichtung 11 ermöglichte kontrollierte Zusammenstellen einer Portion 13, die vier nacheinander von dem Produkt 15 abgetrennte Scheiben 19 umfasst.

Zunächst wurde die Platziereinrichtung 23 dabei vor dem Abtrennen der ersten Scheibe 19 derart eingestellt, dass die erste Scheibe 19 nach dem Abtrennen kontrolliert gegen die Anlehnfläche 25 kippt und daran anlehnt, während sich die Scheibe 19 auf der Ablagefläche 21 abstützt (vgl. Fig. 2A). Diese erste Scheibe 19 gelangt dadurch in direkten Kontakt mit jeweiligen Abschnitten der Anlehnelemente 29, welche entsprechend die streifenartige Anlehnfläche 25 bilden.

Um daraufhin den benötigten Freiraum für das Abtrennen einer zweiten Scheibe 19 zu schaffen, erfolgt von der in Fig. 2A gezeigten Situation zu der in Fig. 2B gezeigten Situation eine Drehbewegung der Platziereinrichtung 23, durch welche der Abstand der Anlehnfläche 25 von der Schneidebene S bzw. deren Position in Förderrichtung F verändert wird. Während dieser Bewegung verändern sich die Abschnitte der Anlehnelemente 29, mit welchen die erste Scheibe 19 in direktem Kontakt steht, sodass die Anlehnfläche 25 während des Zusammenstellens der Portion 13 von verschiedenen Abschnitten der Anlehnelemente 29 gebildet wird.

Um den Platz für die zweite Scheibe 19 auch auf der Ablagefläche 21 bereitzustellen, sind die Bewegungen der Platziereinrichtung 23 bzw. der Anlehnfläche 25 und der Förderbänder 39 derart synchronisiert, dass der Stützpunkt 51 der ersten Scheibe 19 auf der Ablagefläche 21 in gleicher Weise wie die Anlehnfläche 25 in Förderrichtung F verschoben wird. Somit wird auch die erste Scheibe 19 an der Anlehnfläche 25 anlehnend in Förderrichtung F verschoben, wobei das Anlehnelement 29 während der Drehung der Platziereinrichtung 23 an der Scheibe 19 entlanggleitet und die Anlehnfläche 25 von sich verändernden Abschnitten dieser Elemente gebildet wird. Um die erste Scheibe 19 während des Verschiebens zuverlässig zu stützen, weist die Ablagefläche 21 hierbei eine Antirutschstruktur 41 auf, welche als Verzahnung ausgebildet ist und ein Verrutschen des Stützpunktes 51 der Scheibe 19 auf der Ablagefläche 21 verhindert.

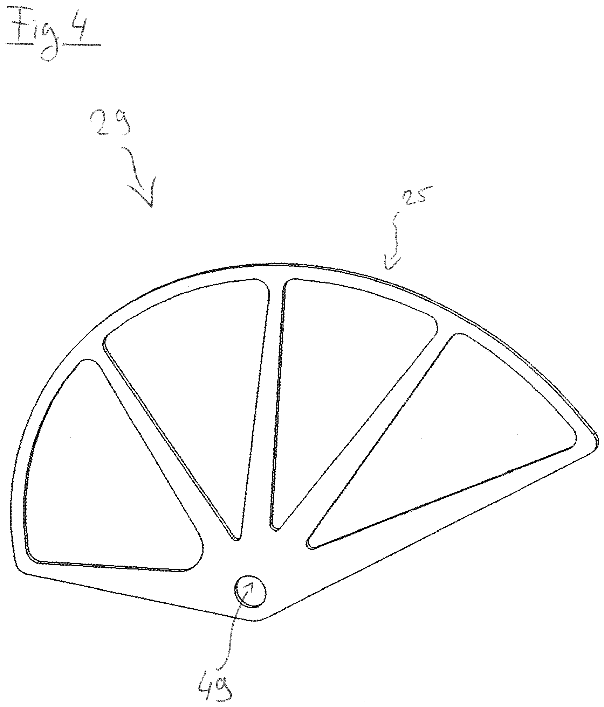

Im gezeigten Ausführungsbeispiel sind die Anlehnelemente 29 bzw. deren die Anlehnfläche 25 bildenden Abschnitte in Form einer logarithmischen Spirale ausgebildet (vgl. Fig. 4). Zunächst kann durch eine solche spiralförmige Ausbildung der Anlehnelemente 29 erreicht werden, dass der Abstand der Anlehnfläche 25 zu der Schneidebene S bzw. die Position der Anlehnfläche 25 in Förderrichtung F durch eine Drehung der Platziereinrichtung 23 aufgrund des sich verändernden Spiralradius angepasst werden kann. Ferner ermöglicht eine solche als logarithmische Spirale geformte Anlehnfläche 25, dass die sich an der Anlehnfläche 25 anlehnende erste Scheibe 19 bei einer synchronisierten Bewegung der Anlehnfläche 25 und des Stützpunktes 51 auf der Ablagefläche 21 stets die gleiche Neigung relativ zu der Ablagefläche 21 beibehält. Somit kann die zweite Scheibe 19, die sich an der zuerst abgetrennten Scheibe 19 anlehnt, mit gleicher Neigung nach dem Abschneiden positioniert werden, so dass sämtliche Scheiben 19 unter gleichen Bedingungen von dem Produkt 15 abgetrennt und daraufhin angelehnt werden können.

Die Fig. 2C und 2D zeigen das Abtrennen zweier weiterer Scheiben 19, wobei die Platziereinrichtung 23 und die Förderbänder 39 kontinuierlich bzw. zwischen dem Abtrennen zweier Scheiben 19 weiterbewegt werden, um den jeweiligen benötigten Freiraum für eine folgende Scheibe 19 zu schaffen. In Fig. 2E ist die Platziereinrichtung 23 mit den Anlehnelementen 29 und der Anlehnfläche 25 unter die Ablagefläche 21 gebracht, so dass die vollständig zusammengestellte Portion 13 aus vier Scheiben 19 auf der Ablagefläche 21 als geschindelter Stapel abgelegt ist. Diese kontrollierte und wunschgemäß zusammengestellte Portion 13 kann in der Folge mittels der Förderbänder 39 beispielsweise in Förderrichtung F an eine nicht gezeigte nachgelagerte Einrichtung übergeben werden, mittels derer die Portion 13 an etwaige nachgelagerte Verarbeitungsschritte und insbesondere eine Verpackungsmaschine übergeben werden kann.

Die Fig. 3A und 3B zeigen eine weitere Möglichkeit zur variablen Einstellung der Portioniereinrichtung 11, wobei der Abstand der Anlehnfläche 25 zu der Schneidebene S vor dem Abtrennen der ersten Scheibe 19 verschieden eingestellt ist. Dabei ist der Abstand zwischen der Schneidebene S bzw. dem Stützpunkt 51 der Scheibe 19 und der Anlehnfläche 25 in Förderrichtung F in Fig. 3A geringer als in Fig. 3B, so dass die in Fig. 3B gezeigte erste abgetrennte Scheibe 19 in einem spitzeren Winkel relativ zu der Ablagefläche 21 an der Anlehnfläche 25 anlehnt. Auch eine Anpassung an die zu erwartende Dicke der ersten abzutrennenden Scheibe 19 kann durch eine solche variable Positionierung der Anlehnfläche 25 vor dem Abtrennen erfolgen. Ferner kann es vorgesehen sein, dass die Platziereinrichtung 23 nicht ausschließlich um eine starre Achse drehbewegbar, sondern um eine translatorisch entlang der Förderrichtung F verschiebbare Achse verdrehbar ist. Insbesondere kann eine solche Achse dabei um die Dicke einer Scheibe 19 bzw. die Ausdehnung einer vollständigen Portion 13 in Förderrichtung F verschiebbar sein.

Ferner ist es auch möglich, zwischen den Bewegungen der Anlehnfläche 25 und der Förderbänder 39 in Förderrichtung F eine Übersetzungsstufe vorzusehen, um beispielsweise, anders als in den Fig. 2A bis 2E gezeigt, nicht für jede der abzutrennenden Scheiben 19 eine gleiche Neigung bereitzustellen, sondern die Scheiben 19 zunehmend stärker zu neigen und kontinuierlich auf der Ablagefläche 21 abzulegen. Dazu kann beispielsweise der Abstand in Förderrichtung F zwischen der Anlehnfläche 25 und dem Stützpunkt 51 der ersten Scheibe 19 kontinuierlich vergrößert werden.

Fig. 4 zeigt nochmals eine perspektivische Seitenansicht auf ein Anlehnelement 29 der Platziereinrichtung 23, welches einen in Form einer logarithmischen Spirale ausgebildeten Abschnitt aufweist, der die Anlehnfläche 25 bildet. Ferner weist das Anlehnelement 29 eine Öffnung 49 auf, durch welche das Anlehnelement 29 mit dem Antrieb 37 verbunden werden kann.

Durch eine derartige Portioniereinrichtung 11 mit einer Platziereinrichtung 23, die eine in Förderrichtung F bewegbare Anlehnfläche 25 aufweist, kann folglich ein kontrolliertes und wunschgemäßes Zusammenstellen von Portionen 13 aus von Lebensmittelprodukten 15 abgetrennten Scheiben 19 erfolgen. Dabei dient das hier gezeigte Ausführungsbeispiel lediglich der Veranschaulichung des Konzeptes einer solchen Portioniereinrichtung 11, während grundsätzlich auch weitere Ausführungsformen, insbesondere auch mit translatorisch entlang der Förderrichtung F verschiebbaren Anlehnflächen 25, möglich sind.

### Bezugszeichenliste

- 11: Portioniereinrichtung
- 13: Portion
- 15: Lebensmittelprodukt
- 17: Aufschneidevorrichtung
- 19: Scheibe
- 21: Ablagefläche
- 23: Platziereinrichtung
- 25: Anlehnfläche
- 29: Anlehnelement
- 31: Schlitz
- 33: Fördermittel
- 35: Steuereinrichtung
- 37: Antrieb
- 39: Förderband
- 41: Antirutschstruktur
- 43: Produktzufuhr
- 45: Messer
- 47: Basis
- 49: Öffnung
- 51: Stützpunkt

- F: Förderrichtung
- S: Schneidebene
- Z: Zuführrichtung

## Patentansprüche

1. Portioniereinrichtung (11) zum Zusammenstellen von Portionen (13), die zumindest eine von einem Lebensmittelprodukt (15), insbesondere Fleischprodukt, insbesondere Frischfleischprodukt, mittels einer Aufschneidevorrichtung (17) abgetrennte Scheibe (19) und/oder zumindest ein mittels der Aufschneidevorrichtung (17) von dem Lebensmittelprodukt (15) abgetrenntes Stück umfassen,
mit einer sich entlang einer Förderrichtung (F) erstreckenden Ablagefläche (21) zum Ablegen der Portionen (13) und
mit einer bewegbaren Platziereinrichtung (23),
wobei die Platziereinrichtung (23) eine sich von der Ablagefläche (21) erhebende Anlehnfläche (25) für zumindest eine erste abgetrennte und sich auf der Ablagefläche (21) abstützende Scheibe (19) und/oder für zumindest ein erstes abgetrenntes und sich auf der Ablagefläche (21) abstützendes Stück aufweist, und
wobei durch das Bewegen der Platziereinrichtung (23) die Position der Anlehnfläche (25) in Bezug auf die Förderrichtung (F) und/oder die Lage der Anlehnfläche (25) relativ zu der Ablagefläche (21) veränderbar ist.

2. Portioniereinrichtung (11) nach Anspruch 1,
wobei die Anlehnfläche (25) zumindest abschnittsweise gekrümmt und/oder relativ zu der Ablagefläche (21) geneigt verläuft.

3. Portioniereinrichtung (11) nach Anspruch 1 oder 2,
wobei die Anlehnfläche (25) zumindest abschnittsweise spiralförmig verläuft, insbesondere wobei die Anlehnfläche (25) zumindest abschnittsweise in Form einer logarithmischen Spirale (27) verläuft.

4. Portioniereinrichtung (11) nach einem der vorhergehenden Ansprüche,
wobei die Anlehnfläche (25) durch das Bewegen der Platziereinrichtung (23) unter die Ablagefläche (21) bringbar ist.

5. Portioniereinrichtung (11) nach einem der vorhergehenden Ansprüche,
wobei die Platziereinrichtung (23) mehrere quer zur Förderrichtung (F) beabstandete Anlehnelemente (29) aufweist, welche die Anlehnfläche (25) bilden,
insbesondere wobei die Anlehnelemente (29) durch jeweilige in der Ablagefläche (21) vorhandene und sich in Förderrichtung (F) erstreckende Schlitze (31) hindurchgreifen.

6. Portioniereinrichtung (11) nach einem der vorhergehenden Ansprüche,
wobei die Platziereinrichtung (23) drehbewegbar ist.

7. Portioniereinrichtung (11) nach einem der vorhergehenden Ansprüche,
wobei ein bewegbares Fördermittel (33) zum Bewegen der auf der Ablagefläche (21) abgestützten und/oder abgelegten Scheiben und/oder Stücke in Förderrichtung (F) vorgesehen ist.

8. Portioniereinrichtung (11) nach Anspruch 7,
wobei eine Steuereinrichtung (35) vorgesehen ist, welche dazu ausgebildet ist, das Bewegen des Fördermittels (33) und das Bewegen der Platziereinrichtung (23) aufeinander abzustimmen, insbesondere miteinander zu synchronisieren, und/oder
wobei das Fördermittel (33) und die Platziereinrichtung (23) einen gemeinsamen Antrieb (37) aufweisen.

9. Portioniereinrichtung (11) nach Anspruch 7 oder 8,
wobei die Ablagefläche (21) durch das Fördermittel (33) in Förderrichtung (F) bewegbar ist.

10. Portioniereinrichtung (11) nach einem der Ansprüche 7 bis 9,
wobei das Fördermittel (33) zumindest ein in Förderrichtung (F) umlaufendes Förderband (39) umfasst, welches die Ablagefläche (21) bildet, insbesondere wobei das Fördermittel (33) mehrere quer zu der Förderrichtung (F) voneinander beabstandete Förderbänder (39) und/oder Förderriemen umfasst, welche die Ablagefläche (21) bilden.

11. Portioniereinrichtung (11) nach einem der vorhergehenden Ansprüche,
wobei die Ablagefläche (21) mit einer Antirutschstruktur (41) versehen ist und /oder
wobei die Ablagefläche (21) im Wesentlichen horizontal ausgerichtet ist.

12. Aufschneidevorrichtung (17) zum Aufschneiden und/oder Zerteilen von Lebensmittelprodukten (15), insbesondere Fleischprodukten, insbesondere Frischfleischprodukten, in Scheiben (19) und/oder Stücke,
mit einer Produktzufuhr (43), die dazu ausgebildet ist, zumindest ein Produkt entlang einer Zuführrichtung (Z) durch eine Schneidebene (S) zu führen, in welcher mittels zumindest eines, insbesondere rotierenden und/oder umlaufenden, Messers (45) Scheiben (19) und/oder Stücke von dem zumindest einen Produkt abgetrennt werden, und
mit zumindest einer Portioniereinrichtung (11) nach einem der vorhergehenden Ansprüche.

13. Aufschneidevorrichtung (17) nach Anspruch 12,
wobei die Portioniereinrichtung (11) in Zuführrichtung (Z) unmittelbar nachfolgend auf die Schneidebene (S) angeordnet ist.

14. Aufschneidevorrichtung (17) nach Anspruch 12 oder 13,
wobei die Förderrichtung (F), entlang derer sich die Ablagefläche (21) der Platziereinrichtung (23) erstreckt, im Wesentlichen horizontal verläuft und/oder
wobei die Zuführrichtung (Z) mit der Förderrichtung (F) übereinstimmt.

15. Aufschneidevorrichtung (17) nach einem der Ansprüche 12 bis 14,
wobei eine Steuereinrichtung (35) vorgesehen ist, welche dazu ausgebildet ist, das Bewegen der Platziereinrichtung (23) auf den Betrieb der Aufschneidevorrichtung (17) abzustimmen, und/oder
wobei der Portioniereinrichtung (11) eine Fördereinrichtung zum Weiterfördern der Portionen (13) nachgelagert ist, wobei die Portioniereinrichtung (11) dazu ausgebildet ist, die Portionen (13) an die Fördereinrichtung zu übergeben.
